(19) Europäisches Patentamt

European Patent Office

Office européen des brevets

(11) **EP 4 632 028 A1**

(12) **EUROPEAN PATENT APPLICATION**

(43) Date of publication:
**15.10.2025 Bulletin 2025/42**

(21) Application number: **24168996.7**

(22) Date of filing: **08.04.2024**

(51) International Patent Classification (IPC):
***C09J 7/24*** *(2018.01)*

(52) Cooperative Patent Classification (CPC):
**C09J 7/243;** C09J 2301/122; C09J 2407/00;
C09J 2423/046; C09J 2433/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **TESA SE**
**22848 Norderstedt (DE)**

(72) Inventors:
- **AHMAD, Fakhar Aziz**
  **22848 Norderstedt (DE)**
- **MIES, Michel**
  **22848 Norderstedt (DE)**
- **WINKLER, Tobias**
  **22848 Norderstedt (DE)**

(74) Representative: **tesa SE**
**Hugo-Kirchberg-Straße 1**
**22848 Norderstedt (DE)**

(54) **ADHESIVE TAPE**

(57) Adhesive tape comprising a backing layer and an adhesive layer comprising a pressure-sensitive adhesive composition on at least one side of the backing layer, **characterized in that** the backing layer comprises biaxial oriented poly-ethylene (BOPE) and has a thickness of from 10 $\mu$m and 80 $\mu$m.

100

110
120

Fig. 1a

EP 4 632 028 A1

**Description**

The invention relates to adhesive tape especially suitable as carton sealing tape (CST) or green house repair tape and to its use.

Carton sealing tapes have been known for a long time and are widely used. Most adhesive tapes are made of polyvinylchloride (PVC), polyethylene terephthalate (PET) or polypropylene (PP). Especially PVC is problematic in an environmental view. The carbon dioxide footprint of these materials is rather high.

Polyethylene (PE), also biaxially oriented PE (BOPE) is mentioned as material for adhesive tapes for example in US 2015/0284599 A1.

But carton sealing tapes have special requirements regarding their properties like tensile strength or tear resistance.

Additionally, they should not develop toxics as a result of incineration.

Also, the tape should be recycling friendly, also when it is for example used on plastic materials. An example for guidelines for such materials is the RecyClass certification (https://recv-class.eu/recyclability/design-for-recycling-guide lines/).

There is the need of a material that has a lower $CO_2$ footprint to improve the environmental impact.

This is also important if the tape is used on plastic material like PE foils for example when used for green houses made out of such foils.

It is the object on the invention to provide an adhesive tape with improved environmental impact and preferably with comparable properties of known carton sealing tapes.

This aim is achieved by the inventions as claimed in the independent claims. Advantageous embodiments are described in the dependent claims.

The problem is solved with an adhesive tape comprising a backing layer and an adhesive layer comprising a pressure-sensitive adhesive composition on at least one side of the backing layer, wherein the backing layer comprises biaxial oriented polyethylene (BOPE) and in case of natural rubber as pressure-sensitive adhesive with a thickness of more than 25 μm or a thickness of less than 25 μm.

In a preferred embodiment the adhesive tape consists of a backing layer and an adhesive layer comprising a pressure-sensitive adhesive composition on one side of the backing layer, wherein the backing layer comprises biaxial oriented polyethylene (BOPE) and in case of natural rubber as pressure-sensitive adhesive with a thickness of more than 25 μm or a thickness of less than 25 μm. Furthermore, the adhesive tape does not comprise a release coating on the backing layer opposite the adhesive composition.

In a preferred embodiment the pressure-sensitive adhesive composition is on one side of the backing layer. The adhesive tape is then a single sided adhesive tape.

In a preferred embodiment the backing layer has a thickness of from 25 μm and 80 μm, preferably between 25 μm and 80 μm, preferably in the range from 30 μm to 50 μm, more preferably in the range from 35 to 45 μm, even more preferably 38 to 42 μm.

In another embodiment the backing layer has a thickness of between 10 μm and 25 μm, preferably in the range from 10 μm to 22 μm, more preferably in the range from 15 to 20 μm.

For the backing layer an oriented film carrier is used. By means of orientation - synonymous with stretching of the primary film formed primarily in the manufacturing operation into one or more preferential directions - it is possible to exert a targeted influence on the mechanical properties. So-called biaxially oriented films may be on alternative be stretched sequentially, with the primary film, after having being formed by extrusion with a slot die, being stretched firstly in the machine direction, by being passed over a sequence of rollers, the transport speed of the film being greater than the speed on exit from the extrusion die. The film is subsequently stretched in the transverse direction in a drawing unit. Stretching of the film in two directions may also be performed in one step (compare for example US 4,675,582 A and US 5,072,493).

The principle of orienting lies in the aligning of the polymer molecule chains and of the crystal structures formed from them, and also in the aligning of the amorphous regions into particular preferential directions, and in the associated increase in strength. In principle, however, the strength is reduced in the direction in which no orientation takes place.

In another embodiment the backing layer is reinforced by joining-on fibre-like materials.

The backing layer preferably consists of biaxially oriented polyethylene (BOPE).

One advantage of the use of BOPE is the high tear resistance compared to PVC of similar thickness, preferably a tear resistance in the ballpen test.

Another benefit is the lower density of BOPE compared to PVC. This reduces the weight of the resulting adhesive tape.

The adhesive tape may comprise further components like dyes and/or pigments. The further components may be part of the backing layer and/or incorporated in the adhesive layer.

When coating the backing layer with the adhesive layer it is possible to use the backing layer directly. Alternatively, the side that is later to be coated with the adhesive layer may be generally being subjected to a fluorine treatment, a plasma treatment, a corona pretreatment or else flame pretreatment, in order to anchor the adhesive layer more effectively on the backing layer carrier.

A further improvement in the adhesion, synonymous with the anchoring of the adhesive layer on the backing layer and therefore with the prevention of transfer of adhesive to the reverse of the adhesive tape during unwinding of a roll (or as an alternative treatment), may be accomplished through the use of primers (also called adhesion promoters). Primers which can be used are the known dispersion systems and solvent systems, based for example on isoprene- or butadiene-containing rubbers and/or cyclo rubbers. Isocyanates or epoxy resins as additives improve the adhesion and, in some cases, also increase the shear strength of the pressure-sensitive adhesive. Isocyanate-crosslinked primers are preferred.

With these primers it is possible, firstly, to tailor the surface energy in line with objectives, and, secondly, to pursue chemical attachment of the adhesive component to the carrier in the case, for example, where isocyanate-containing primers are used.

The normal application weight of the primer per unit area is between 0.01 and 10 $g/m^2$, preferably between 0.01 and 3 $g/m^2$, more preferably between 0.05 and 0.2 $g/m^2$.

In a preferred embodiment no primers are used if the adhesive composition is water-based acrylic adhesive. In another preferred embodiment no pretreatment or primer are used for anchoring the adhesive layer to the backing layer.

In the adhesive tapes according to the invention, a pressure-sensitive adhesive layer is disposed on one side of the backing layer. In the present application, the terms "pressure-sensitive adhesive" and "self-adhesive" and the terms "pressure-sensitively adhesive" and "self-adhesive" are used synonymously.

A "pressure-sensitive adhesive" is in general a substance which is permanently tacky and adhesive - especially at room temperature. It is a characteristic feature of a pressure-sensitive adhesive that it can be applied to a substrate by pressure and adheres there, with no specific definition of the pressure to be expended and the time for which this pressure is applied. In some cases, depending on the exact type of pressure-sensitive adhesive, temperature and air humidity, and the substrate, the application of a brief minimal pressure not exceeding a light touch for a brief moment is sufficient to achieve the adhesion effect; in other cases, even a prolonged period of application of a high pressure may be necessary.

Pressure-sensitive adhesives have particular characteristic viscoelastic properties that lead to permanent tack and adhesiveness. It is a characteristic feature of these that, when they are mechanically deformed, the result is both viscous flow processes and the development of elastic resilience forces. Both processes are in a particular ratio to one another in terms of their respective proportions, depending both on the exact composition, structure and level of crosslinking of the pressure-sensitive adhesive and on the speed and duration of the deformation, and on the temperature.

The viscous flow component is necessary for achievement of adhesion. Only the viscous components caused by macromolecules having relatively high mobility enable good wetting and good adaptation to the substrate to be bonded. A high proportion of viscous flow leads to high pressure-sensitive adhesiveness (also referred to as tack or surface tack) and hence often also to a high bonding force. Highly crosslinked systems, or polymers that are crystalline or solidify in vitreous form, generally have at least only low pressure-sensitive adhesion, if any, for lack of free-flowing components.

The elastic resilience force components are needed for achievement of cohesion. They are caused, for example, by very long-chain and entangled macromolecules that are crosslinked physically or chemically, and enable transmission of the forces that attack an adhesive bond. They have the effect that an adhesive bond can withstand a sustained stress acting thereon, for example in the form of a sustained shear stress, to a sufficient degree over a prolonged period of time.

For more exact description and quantification of the degree of elastic and viscous components and of the relative ratio of the components, it is possible to use the parameters of storage modulus (G') and loss modulus (G") that can be determined by means of dynamic-mechanical analysis (DMA). G' is a measure of the elastic component, G" a measure of the viscous component of a substance. Both parameters are dependent on deformation frequency and temperature.

The parameters can be ascertained with the aid of a rheometer. The material to be examined is subjected here to a sinusoidally oscillating shear stress, for example in a plate-plate arrangement. In the case of shear stress-controlled devices, deformation is measured as a function of time and of the time delay of this deformation with respect to the onset of shear stress. This time delay is referred to as the phase angle $\delta$. The storage modulus G' is defined as follows: $G' = (\tau/\gamma)$ •$\cos(\delta)$ ($\tau$ = shear stress, $\gamma$ = deformation, $\delta$ = phase angle = phase shift between shear stress vector and deformation vector).

A substance is generally considered to be pressure-sensitively adhesive and is defined as being pressure-sensitively adhesive for the purposes of the invention when, at room temperature, here by definition at 23°C, G' is at least partly within the range from $10°$ to $10^1$ rad/sec within the deformation frequency range from $10^3$ to $10^7$ Pa, and when G" is likewise at least partly within this range. What is meant by "partly" is that at least a section of the G' curve is within the window defined by the deformation frequency range from $10°$ to $10^1$ rad/sec inclusive (abscissa) and the range of G' values from $10^3$ to $10^7$ Pa inclusive (ordinate) This is correspondingly true of G".

In a preferred embodiment the adhesive composition is solvent-based, water-based or hotmelt system adhesive, preferably water-based or hotmelt system adhesive, even more preferably a water-based system.

The pressure-sensitive adhesive composition of the adhesive tape can be adapted to the intended application of the adhesive tape. Non-limiting examples of suitable adhesives include natural rubber, synthetic rubber, acrylic-based adhesives, silicone-based adhesives, modified acrylic-based adhesives, modified rubber-based adhesives, and combinations thereof.

In a preferred embodiment the pressure-sensitive adhesive composition is based on natural rubber, acrylic-based adhesives, and combinations thereof.

In a preferred embodiment the pressure-sensitive adhesive composition is based on natural rubber or water-based acrylic adhesives, preferably water-based acrylic adhesives.

The pressure-sensitive adhesive composition of the adhesive tape according to the invention may be based on polymers of different chemical structure. For example, they may be based on acrylate (co)polymer, silicone (co)polymer, natural rubber, nitrile rubber, i.e., acrylonitrile-butadiene rubber, chemically or physically crosslinked synthetic rubber or a mixture (blend) thereof.

It is possible to use silicone adhesives and also polyacrylate adhesives, preferably a low molecular mass acrylate hotmelt pressure-sensitive adhesive or a water-based polyacrylate adhesive, preferably water-based polyacrylate adhesive.

The adhesive is a pressure sensitive adhesive (PSA). These are materials having a tacky surface and the ability to adhere without activation by any energy source. These materials adhere when pressed against the surface, preferably already when pressed by hand. The adhesive has more preferably enough cohesive strength to be removed cleanly from the adherend.

In a preferred embodiment of the invention the adhesive composition is present with a weight in the range from 5 $g/m^2$ to 30 $g/m^2$, preferably from 10 $g/m^2$ to 25 $g/m^2$, more preferably from 17 to 25 $g/m^2$.

The adhesive composition may consist of natural rubbers or of any desired blend of natural rubbers and/or synthetic rubbers, the proportion of synthetic rubber in the blend, according to one preferred variant, being at most as great as the proportion of the natural rubber.

Rubber adhesives display a good combination of bond strength, tack and cohesion and also balanced adhesion performance on virtually all relevant substrates and are therefore predestined. General information on rubber adhesives can be found in sources including standard works for adhesive tapes, such as, for example, the "Handbook of Pressure Sensitive Adhesive Technology", Third Edition, (1999), by Donatas Satas.

The natural rubber or natural rubbers may be selected in principle from all available qualities such as, for example, crepe, RSS, ADS, TSR, or CV types, according to the required level of purity and of viscosity, and the synthetic rubber or synthetic rubbers may be selected from the group of randomly copolymerized styrene-butadiene rubbers (SBR), styrene-isoprene rubbers (SIS), butadiene rubbers (BR), synthetic polyisoprenes (IR), butyl rubbers (IIR), halogenated butyl rubbers (XIIR), acrylate rubbers (ACM), ethylene-vinyl acetate copolymers (EVA), and polyurethanes, and/or blends thereof.

The synthetic rubber used is preferably at least one vinylaromatic block copolymer in the form of a block copolymer having an A-B, A-B-A, $(A-B)_n$, $(A-B)_nX$, $(A-B-A)_nX$ or A-B-X$(A'-B')_n$ structure, in which

- the A or A' blocks are independently a polymer formed by polymerization of at least one vinylaromatic, for example styrene or $\alpha$-methylstyrene;
- the B or B' blocks are independently a polymer formed by polymerization of conjugated dienes having 4 to 18 carbon atoms and/or a polymer formed from an isoprene, butadiene, a farnesene isomer or a mixture of butadiene and isoprene or a mixture of butadiene and styrene, or containing entirely or partially ethylene, propylene, butylene and/or isobutylene, and/or a partly or fully hydrogenated derivative of such a polymer;
- X is the radical of a coupling reagent or initiator and
- n is an integer $\geq 2$.

More particularly, all synthetic rubbers are block copolymers having a structure as detailed above. The synthetic rubber may thus also comprise mixtures of various block copolymers having a construction as above. A-B diblock copolymers are typically not used alone.

Suitable block copolymers (vinylaromatic block copolymers) thus comprise one or more rubber-like blocks B or B' (soft blocks) and one or more glass-like blocks A or A' (hard blocks). Particular preference is given to a block copolymer having an A-B, A-B-A, $(A-B)_3X$ or $(A-B)_4X$ construction, where the above meanings are applicable to A, B and X. Most preferably, all synthetic rubbers are block copolymers having an A-B, A-B-A, $(A-B)_3X$ or $(A-B)_4X$ construction, where the above meanings are applicable to A, B and X. More particularly, the synthetic rubber is a mixture of block copolymers having an A-B, A-B-A, $(AB)sX$ or $(A-B)_4X$ structure, preferably comprising at least diblock copolymers A-B and/or triblock copolymers A-B-A.

Also advantageous is a mixture of diblock and triblock copolymers and $(A-B)_n$ or $(A-B)_nX$ block copolymers with n not less than 3.

A blocks are generally vitreous blocks each having a glass transition temperature above room temperature (room temperature in the context of this invention shall be understood to mean 23°C). In some advantageous embodiments, the glass transition temperature of the vitreous block is at least 40°C, preferably at least 60°C, even more preferably at least 80°C or very preferably at least 100°C.

The vinylaromatic block copolymer generally also has one or more rubber-like B blocks having a glass transition temperature less than room temperature. In some embodiments, the Tg of the soft block is less than -30°C or even less than -60°C.

As well as the inventive and particularly preferred monomers mentioned for the B blocks, further advantageous embodiments include a polymerized conjugated diene, a hydrogenated derivative of a polymerized conjugated diene or a combination thereof. In some embodiments, the conjugated dienes comprise 4 to 18 carbon atoms.

Preferred conjugated dienes as monomers for the soft block B are especially selected from the group consisting of butadiene, isoprene, ethylbutadiene, phenylbutadiene, piperylene, pentadiene, hexadiene, ethylhexadiene and dimethylbutadiene, and any desired mixtures of these monomers. The B block may also be in the form of a homopolymer or copolymer.

Examples of further advantageous conjugated dienes for the B blocks additionally include ethylbutadiene, phenylbutadiene, piperylene, pentadiene, hexadiene, ethylhexadiene and dimethylbutadiene, where the polymerized conjugated dienes may be in the form of a homopolymer or of a copolymer.

More preferably, the conjugated dienes as monomers for the soft block B are selected from butadiene and isoprene. For example, the soft block B is a polyisoprene, a polybutadiene or a partly or fully hydrogenated derivative of one of these two polymers, such as polybutylenebutadiene in particular, or a polymer formed from a mixture of butadiene and isoprene. Most preferably, the B block is a polybutadiene.

The proportion of A blocks based on the overall block copolymers preferably averages 10% to 40% by weight, more preferably 15% to 33% by weight.

A preferred polymer for A blocks is polystyrene. Preferred polymers for B blocks are polybutadiene, polyisoprene, polyfarnesene and the partly or fully hydrogenated derivatives thereof, such as polyethylene-butylene, polyethylene-propylene, polyethylene-ethylene-propylene or polybutylene-butadiene or polyisobutylene. Polybutadiene is very preferred. Mixtures of different block copolymers may be used. Preference is given to using triblock copolymers ABA and/or diblock copolymers AB.

Block copolymers may be linear, radial or star-shaped (multi-arm.

The aforementioned types of vinylaromatic block copolymers are also preferably used in pressure sensitive adhesives based on vinylaromatic block copolymer.

Furthermore, preferably, in order to enhance their processing qualities, the rubbers may be admixed with thermoplastic elastomers, with a weight fraction of 10 to 50 % by weight, based on the overall elastomer fraction.

Representatives that may be mentioned at this point include in particular the especially compatible styrene-isoprene-styrene (SIS) and styrene-butadiene-styrene (SBS) types.

Suitable elastomers for blending are also, for example, EPDM or EPM rubber, polyisobutylene, butyl rubber, ethylene-vinyl acetate, hydrogenated block copolymers of dienes (for example, by hydrogenation of SBR, cSBR, BAN, NBR, SBS, SIS, or IR; such polymers are known, for example, as SEPS and SEBS) or acrylate copolymers such as ACM.

In addition, a 100% system of styrene-isoprene-styrene (SIS) has proven suitable.

Crosslinking is advantageous for improving the re-detachability of the adhesive tape after application, and may be accomplished thermally or by irradiation with UV light or electron beams.

For the purpose of thermally induced chemical crosslinking it is possible to use all known thermally activatable chemical crosslinkers such as accelerated sulfur systems or sulfur donor systems, isocyanate systems, reactive melamine-, formaldehyde-, and (optionally halogenated) phenol-formaldehyde resins and/or reactive phenolic resin or diisocyanate crosslinking systems with the corresponding activators, epoxidized polyester resins and acrylate resins, and also combinations thereof.

The crosslinkers are preferably activated at temperatures above 50 °C., more particularly at temperatures from 100 °C. to 160 °C., very preferably at temperatures from 110 °C. to 140 °C.

Thermal excitation of the crosslinkers may also take place via IR rays or high-energy alternating fields.

The rubber adhesives, preferably natural rubber or synthetic rubber, are preferably rubber adhesives processable as a hotmelt, especially rubber-based hot melt adhesives.

In the present application, the terms "acrylate", "acrylate-based" and "polyacrylate" are used synonymously. Each is understood to mean a polymer originating from a polymerization of (meth)acrylic acid, an ester thereof or mixtures of the aforementioned monomers, and optionally further copolymerizable monomers. The term "(meth)acrylic acid" also includes both acrylic acid and methacrylic acid. The polyacrylates are typically copolymers.

Polyacrylate pressure-sensitive adhesives usable for the purposes of the invention are solvent-based or water-based polyacrylate adhesives, preferably water-based polyacrylate, or else in the form of a hotmelt system, for example an acrylate hotmelt-based composition, where the latter may have a K value of at least 20, more particularly greater than 30, obtainable by concentrating a solution of such a composition to a system processible as a hotmelt.

Water-based polyacrylates are especially preferred.

The concentrating may take place in appropriately equipped tanks or extruders; preference is particularly given to a vented extruder in the case of associated degassing an adhesive of this kind is set out in DE 43 13 008 AI, the content of which is hereby referenced and incorporated into the present disclosure and invention.

The polyacrylate hotmelt-based adhesive, however, may also be crosslinked chemically.

An adhesive which is likewise found to be suitable is acrylate dispersion pressure-sensitive adhesives as obtainable, for example, under the Acronal® trade name, especially Acronal® DS 3458, from BASF.

In a further embodiment, copolymers used in pressure-sensitive adhesives are those of (meth)acrylic acid and esters thereof having 1 to 25 C atoms, maleic, fumaric and/or itaconic acid and/or their esters, substituted (meth) acrylamides, maleic anhydride and other vinyl compounds, such as vinyl esters, more particularly vinyl acetate, vinyl alcohols and/or vinyl ethers. The residual solvent content ought to be below 1 % by weight.

Another preferred embodiment is a pressure-sensitive adhesive comprising a polyacrylate polymer. This is a polymer obtainable by free-radical polymerization of acrylic monomers, which are also understood to mean methacrylic monomers, and optionally further copolymerizable monomers.

According to the invention, it may be a polyacrylate crosslinkable with epoxy groups. Accordingly, monomers or comonomers used may preferably be functional monomers crosslinkable with epoxy groups; monomers employed here especially include monomers having acid groups (particularly carboxylic acid, sulfonic acid or phosphonic acid groups) and/or hydroxyl groups and/or acid anhydride groups and/or epoxy groups and/or amine groups; preference is given to monomers containing carboxylic acid groups. It is especially advantageous when the polyacrylate includes polymerized acrylic acid and/or methacrylic acid. Further monomers which can be used as comonomers for the polyacrylate are, for example, acrylic and/or methacrylic esters having up to 30 carbon atoms, vinyl esters of carboxylic acids having up to 20 carbon atoms, vinylaromatics having up to 20 carbon atoms, ethylenically unsaturated nitriles, vinyl halides, vinyl ethers of alcohols containing 1 to 10 carbon atoms, aliphatic hydrocarbons having 2 to 8 carbon atoms and 1 or 2 double bonds, or mixtures of these monomers.

Preference is given to using a polyacrylate which can be derived from the following monomer composition:

i) acrylic esters and/or methacrylic esters of the following formula

$$CH_2=C(R^1)(COOR^2)$$

where $R^1$ = H or $CH_3$ and $R^2$ = H or linear, branched or cyclic, saturated or unsaturated alkyl radicals having 1 to 30 and especially having 4 to 18 carbon atoms,
ii) olefinically unsaturated monomers having functional groups of the type already defined for reactivity with epoxy groups,
iii) optionally further acrylates and/or methacrylates and/or olefinically unsaturated monomers copolymerizable with component (i).

Further preferably, for use of the polyacrylate as pressure-sensitive adhesive, the proportions of the corresponding components (i), (ii) and (iii) are chosen such that the polymerization product especially has a glass transition temperature of not more than 15°C (determined by DSC (differential scanning calorimetry) according to DIN 53 765 at a heating rate of 10 K/min).

It is very advantageous for production of the pressure-sensitive adhesives that the monomers of component (i) be chosen with a proportion of 45% to 95% by weight, the monomers of component (ii) with a proportion of 1% to 15% by weight and the monomers of component (iii) with a proportion of 0% to 40% by weight (the figures are based on the monomer mixture for the "base polymer", i.e. without additions of any additives to the finished polymer, such as resins).

The monomers of component (i) are especially plasticizing and/or nonpolar monomers. Preference is given to using, for the monomers (i), acrylic monomers comprising acrylic and methacrylic esters having alkyl groups consisting of 4 to 18 carbon atoms, preferably 4 to 9 carbon atoms. Examples of such monomers are n-butyl acrylate, n-butyl methacrylate, n-pentyl acrylate, n-pentyl methacrylate, n-amyl acrylate, n-hexyl acrylate, hexyl methacrylate, n-heptyl acrylate, noctyl acrylate, n-octyl methacrylate, n-nonyl acrylate, isobutyl acrylate, isooctyl acrylate, isooctyl methacrylate and the branched isomers thereof, for example 2-ethylhexyl acrylate or 2-ethylhexyl methacrylate.

Preference is given to using, for component (ii), monomers having those functional groups selected from the group consisting of hydroxyl, carboxyl, sulfo or phosphonic acid groups, acid anhydrides, epoxides, amines.

Particularly preferred examples of monomers of component (ii) are acrylic acid, methacrylic acid, itaconic acid, maleic acid, fumaric acid, crotonic acid, aconitic acid, dimethylacrylic acid, β-acryloyloxypropionic acid, trichloroacrylic acid, vinylacetic acid, vinylphosphonic acid, itaconic acid, maleic anhydride, hydroxyethyl acrylate, hydroxypropyl acrylate, hydroxyethyl methacrylate,hydroxypropyl methacrylate, 6-hydroxyhexyl methacrylate, allyl alcohol, glycidyl acrylate, glycidyl methacrylate.

Monomers mentioned by way of example for component (iii) are: methyl acrylate, ethyl acrylate, propyl acrylate, methyl methacrylate, ethyl methacrylate, benzyl acrylate, benzyl methacrylate, sec-butyl acrylate, tert-butyl acrylate, phenyl acrylate, phenyl methacrylate, isobornyl acrylate, isobornyl methacrylate, t-butylphenyl acrylate, t-butylphenyl methacrylate, dodecyl methacrylate, isodecyl acrylate, lauryl acrylate, n-undecyl acrylate, stearyl acrylate, tridecyl acrylate, behenyl acrylate, cyclohexyl methacrylate, cyclopentyl methacrylate, phenoxyethyl acrylate, phenoxyethyl methacrylate, 2-butoxyethyl methacrylate, 2-butoxyethyl acrylate, 3,3,5-trimethylcyclohexyl acrylate, 3,5-dimethyladamantyl acrylate, 4-cumylphenyl methacrylate, cyanoethyl acrylate, cyanoethyl methacrylate, 4-biphenyl acrylate, 4-biphenyl methacrylate, 2-naphthyl acrylate, 2-naphthyl methacrylate, tetrahydrofufuryl acrylate, diethylaminoethyl acrylate, diethylaminoethyl, methacrylate, dimethylaminoethyl acrylate, dimethylaminoethyl methacrylate, 2-butoxyethylacrylate, 2-butoxyethyl methacrylate, methyl 3-methoxyacrylate, 3-methoxybutyl acrylate,phenoxyethyl acrylate, phenoxyethyl methacrylate, 2-phenoxyethyl methacrylate, butyldiglycol methacrylate, ethylene glycol acrylate, ethylene glycol monomethyl acrylate, methoxy polyethylene glycol methacrylate 350, methoxy polyethylene glycol methacrylate 500, propylene glycol monomethacrylate, butoxy diethylene glycol methacrylate, ethoxy triethylene glycol methacrylate, octafluoropentyl acrylate, octafluoropentyl methacrylate, 2,2,2-trifluoroethyl methacrylate, 1,1,1,3,3,3-hexafluoroisopropyl acrylate, 1,1,1,3,3,3-hexafluoroisopropyl methacrylate, 2,2,3,3,3-pentafluoropropyl methacrylate, 2,2,3,4,4,4-hexafluorobutyl methacrylate, 2,2,3,3,4,4,4-heptafluorobutyl acrylate, 2,2,3,3,4,4,4-heptafluorobutyl methacrylate, 2,2,3,3,4,4,5,5,6,6,7,7,8,8,8-pentadecafluorooctyl methacrylate, dimethylaminopropylacrylamide, dimethylaminopropylmethacrylamide, N-(1-methylundecyl)acrylamide, N-(n butoxymethyl)acrylamide, N-(butoxymethyl)methacrylamide, N-(ethoxymethyl)acrylamide, N-(noctadecyl) acrylamide, and also N,N-dialkyl-substituted amides, for example N,Ndimethylacrylamide, N,N-dimethylmethacrylamide, N-benzylacrylamide, N-isopropylacrylamide, N-tert-butylacrylamide, N-tert-octylacrylamide, N-methylolacrylamide, N-methylolmethacrylamide, acrylonitrile, methacrylonitrile, vinyl ethers such as vinyl methyl ether, ethyl vinyl ether, vinyl isobutyl ether, vinyl esters such as vinyl acetate, vinyl chloride, vinyl halides, vinylidene chloride, vinylidene halides, vinylpyridine, 4-vinylpyridine, N-vinylphthalimide, N-vinyllactam, Nvinylpyrrolidone, styrene, α- and p-methylstyrene, α-butylstyrene, 4-n-butylstyrene, 4-nde-cylstyrene, 3,4-dimethoxystyrene, macromonomers such as 2-polystyreneethyl methacrylate (molecular weight Mw of 4000 to 13 000 g/mol), poly(methylmethacrylate)ethyl methacrylate (Mw of 2000 to 8000 g/mol).

Monomers of component (iii) may advantageously also be chosen such that they contain functional groups that assist subsequent radiation-chemical crosslinking (for example by electron beams, UV). Suitable copolymerizable photoinitiators are, for example, benzoin acrylate and acrylate-functionalized benzophenone derivatives. Monomers that assist crosslinking by electron bombardment are, for example tetrahydrofurfuryl acrylate, N-tert-butylacrylamide and allyl acrylate, but this enumeration is not conclusive.

In addition, the composition of the pressure-sensitive adhesive based on polyacrylate (or based on an acrylate blend) often includes epoxy-based crosslinkers. Substances containing epoxy groups that are used are especially polyfunctional epoxides, i.e., those that have at least two epoxy units per molecule (i.e., are at least bifunctional). These may be either aromatic or aliphatic compounds. Epoxy-based crosslinkers may also be used in oligomeric or polymeric form.

The mixture of acrylates may in turn further preferably have the following composition:

(I) 90% to 99.5% by weight of n-butyl acrylate and/or 2-ethylhexyl acrylate,
(II) 0% to 10% by weight of an ethylenically unsaturated monomer having an acid or acid anhydride function,

where (I) and (II) preferably add up to 100% by weight.

Preferably, the monomer (I) is composed of a mixture of 2-ethylhexyl acrylate and n-butyl acrylate, further preferably in equal parts.

Useful monomers (II) advantageously include acrylic acid, methacrylic acid, itaconic acid, maleic acid, fumaric acid and/or maleic anhydride, for example.

Preference is given to acrylic acid or methacrylic acid, optionally the mixture of the two.

For achievement of pressure-sensitive adhesive properties, the adhesive should be above its glass transition temperature at the processing temperature in order to have viscoelastic properties. The glass transition temperature of the pressure-sensitive adhesive formulation (polymer-tackifier mixture) is therefore preferably below +15°C (determined by DSC (differential scanning calorimetry) according to DIN 53 765 at a heating rate of 10 K/min).

The glass transition temperature ($T_G$) of the acrylate copolymers can be estimated according to the Fox equation from the glass transition temperatures of the homopolymers and their relative ratios.

To achieve polymers, for example pressure-sensitive adhesives or heat-sealing compositions, having desired glass transition temperatures, the quantitative composition of the monomer mixture is advantageously chosen so as to give the desired $T_G$ for the polymer according to equation (G1) in analogy to the Fox equation (cf. T.G. Fox, Bull. Am. Phys. Soc. 1956, 1, 123).

$$\frac{1}{T_G} \quad \sum_n \frac{w_n}{T_{G,n}}$$

(G1)

n = serial number over the monomers used,

$w_n$ = proportion by mass of the respective monomer n (% by weight) and

$T_{G,n}$ = respective glass transition temperature of the homopolymer formed from the respective monomers n in K.

Analogously, equation G1 can also be employed for determination and prediction of the glass transition temperature of polymer mixtures. In that case, if the mixtures are homogeneous mixtures,

n = serial number over the polymers used,

$w_n$ = proportion by mass of the respective polymer n (% by weight) and

$T_{G,n}$ = respective glass transition temperature of the polymer n in K.

In a preferred embodiment the mixture of acrylates may in turn further preferably have the following composition:

(I) 90% to 99.5% by weight, preferably 96 % to 99.5 % by weight of n-butyl acrylate,

(II) 0.5% to 3% by weight of acrylic acid, methacrylic acid or a mixture thereof

Or

(I) 80% to 90% by weight of 2-ethylhexyl acrylate and 8% to 20% by weight of n-butyl acrylate,

(II) 0 % to 3% by weight of acrylic acid, methacrylic acid or a mixture thereof

The polyacrylates are preferably used as water-based dispersions with a solid content between 40% and 70% by weight, preferably between 45% and 65% by weight.

The possible addition of tackifiers, i.e., tackifying resins, inevitably increases the glass transition temperature, by about 5 to 40 K according to the amount added, compatibility and softening temperature. Preference is therefore given to acrylate copolymers having a glass transition temperature of not more than 0°C.

Preferably the glass transition temperature of the adhesive composition is below -30 °C, preferably below -40 °C, more preferably in the range from -60 °C to -40 °C.

Lastly it may be mentioned that polyurethane-based or polyolefin-based adhesives are suitable as well.

The adhesive preferably is an aqueous milky acrylic emulsion. The adhesive has a solid content of around 53 % by weight (range of solid content could vary from 50 to 65% by weight), the rest is water. The pH of such PSA emulsions could range between 8 to 10. A typical composition for such type of water born Acrylic is: 98% n-Butyl Acrylate & 2% acrylic acid, they are the two components of the adhesive polymer chain.

Examples for such dispersions are PRIMAL PS 83d dispersion from Rohm & Haas or Dow, Plextol XA 2051 from Synthomer or Orgal KY 600 B from Organik Kimya.

For the purpose of optimizing the properties, the pressure-sensitive adhesive employed may have been blended with tackifiers (resins) and/or with one or more adjuvants such as plasticizers, fillers, pigments, UV absorbers, light stabilizers, aging inhibitors, crosslinking agents, crosslinking promoters, or elastomers.

A "tackifier resin" or "tackifying resin", according to the general understanding of those skilled in the art, is understood to refer to an oligomeric or polymeric resin-based substance which increases autoadhesion (tack, intrinsic tackiness) of the pressure-sensitive adhesive compared to the pressure-sensitive adhesive that does not contain any tackifier but is otherwise identical.

Tackifiers are, for example, especially nonhydrogenated or partially, selectively or fully hydrogenated hydrocarbon resins (for example polymers based on unsaturated C5, C9 or C7 monomers or mixtures of these monomers, preferably C5 or C5/C9 monomers), hydrocarbon resin from aromatic petroleum foodstock like Eastman Picco A10, terpene-phenolic resins, polyterpene resins from raw materials such as □- or β-pinene and/or δ-limonene, aromatic resins such as indene-coumarone resins, or resins based on styrene or 0-methyl-styrene such as rosin and its derivatives, such as disproportionated, dimerized, or esterified rosin, for example reaction products with glycol, glycerol, or pentaerythritol. Particularly suitable are aging-stable resins without an olefinic double bond (having no readily oxidizable double bonds), such as terpene-phenolic resins, aromatic resins and more preferably hydrogenated resins, for example hydrogenated aromatic resins, hydrogenated polycyclopentadiene resins, hydrogenated rosin derivatives or hydrogenated polyterpene resins.

Preference is given to resins based on polymers based on unsaturated C5, or C5/C9 monomers. Examples for these resins are Eastman Picco A10 or Eastman Piccotac 1095 Hydrocarbon Resin. Preference is likewise given to tackifying resins having a softening point above 80°C according to ASTM E28-99 (2009).

Express reference may be made to the depiction of the state of knowledge in the "Handbook of Pressure Sensitive Adhesive Technology", Third Edition, (1999), by Donatas Satas.

For the purpose of stabilization, customary adjuvants may be added to the adhesive, such as aging inhibitors (antiozonants, antioxidants, light stabilizers, and so on).

Additives for the adhesive that are typically utilized are as follows:

Plasticizing agents such as, for example, plasticizer oils or low molecular mass liquid polymers such as low molecular mass polybutenes, for example, primary antioxidants such as sterically hindered phenols, for example, secondary antioxidants such as phosphites or thiosyneigists (thioethers), for example, process stabilizers such as C-radical scavengers, for example, light stabilizers such as UV absorbers or sterically hindered amines, for example, processing assistants, wetting additives, adhesion promoters, endblock reinforcer resins and/or optionally further polymers preferably elastomeric in nature; elastomers utilizable accordingly include, among others, those based on pure hydrocarbons, as for example unsaturated polydienes such as natural or synthetically generated polyisoprene or polybutadiene, chemically substantially saturated elastomers such as, for example, saturated ethylene-propylene copolymers, $\alpha$-olefin copolymers, polyisobutylene, butyl rubber, ethylene-propylene rubber, and also chemically functionalized hydrocarbons such as, for example, halogen-containing, acrylate-containing, allyl or vinyl ether-containing polyolefins, fillers such as fibers, zinc oxide, titanium dioxide, solid microspheres, solid or hollow glass spheres, silica, silicates, chalk.

Suitable fillers and pigments are, for example, fibers, carbon black, zinc oxide, titanium dioxide, solid microbeads, solid or hollow glass beads, silica, silicates, carbon black, chalk, titanium dioxide, calcium carbonate and/or zinc carbonate.

Suitable aging inhibitors (antiozonants, antioxidants, light stabilizers, etc.) for the adhesives are primary antioxidants such as sterically hindered phenols, for example, secondary antioxidants such as phosphites or thiosyneigists (thioethers), for example, and/or light stabilizers such as UV absorbers or sterically hindered amines, for example.

Suitable plasticizers are, for example, aliphatic, cycloaliphatic, and aromatic mineral oils, diesters or polyesters of phthalic acid, trimellitic acid, or adipic acid, liquid rubbers (for example, nitrile rubbers or polyisoprene rubbers), liquid polymers of butene and/or isobutene, acrylic esters, polyvinyl ethers, liquid resins and plasticizing resins based on the raw materials for tackifier resins, wool wax and other waxes, or liquid silicones.

Crosslinking agents are, for example, phenolic resins or halogenated phenolic resins, melamine resins and formaldehyde resins. Suitable crosslinking promoters are, for example, maleimides, allyl esters such as triallyl cyanurate, and polyfunctional esters of acrylic and methacrylic acids.

The substances recited are in turn not mandatory; the adhesive also functions without their addition individually or in any combination, in other words without resins and/or residual adjuvants.

The adhesive composition preferably forms a layer on the backing.

The adhesive composition on the backing layer has a weight in the range of 10 to 30 g/m$^2$, preferably from 15 to 25 g/m$^2$.

The adhesive composition preferably has a thickness in the range of 5 to 40 $\mu$m. The thickness depends on the coating weight of the adhesive composition.

In a preferred embodiment the backing layer has a thickness the range from 35 to 45 $\mu$m and the adhesive composition on the backing layer has a weight in the range of 15 to 25 g/m$^2$.

The adhesive tape may be produced in the form of a roll, in other words in the form of an Archimedean spiral wound up into itself, or else with lining on the adhesive side using release materials such as siliconized paper or siliconized film.

In a preferred embodiment the adhesive tape comprises a release coating on the backing layer opposite to the adhesive composition.

In another especially preferred embodiment, the adhesive tape does not comprise a release coating on the backing layer opposite the adhesive composition, especially when water-based acrylic adhesive is used.

The requirement of a release coating may depend on the pressure-sensitive adhesive used. For example, natural rubber may require a release coating.

The release coating may have had a reverse-face varnish applied to it, in order to exert a favorable influence over the unwind properties of the adhesive tape wound to form an Archimedean spiral. For this purpose, this reverse-face varnish may have been equipped with silicone or fluorosilicone compounds and also with polyvinylstearylcarbamate, polyethyleneiminestearylcarbamide, or organofluorine compounds as substances with adhesive (antiadhesive) effect.

Further suitable release coatings include surfactant-based release systems based on long-chain alkyl groups such as stearyl sulfosuccinates or stearyl sulfosuccinamates, but also polymers, which may be selected from the group consisting of polyvinyistearylcarbamates, polyethyleneiminestearylcarbamides, chromium complexes of C14 to C28 fatty acids, and stearyl copolymers, as described in DE 28 45 541 A, for example. Likewise suitable are release agents based on acrylic polymers with perfluorinated alkyl groups, silicones or fluorosilicone compounds, for example based on poly (dimethylsiloxanes). With particular preference the release coating comprises a silicone-based polymer. Particularly preferred examples of such silicone-based polymers with release effect include polyurethane-modified and/or polyurea-modified silicones, preferably oigano-polysiloxane/ polyurea/polyurethane block copolymers, more preferably those as described in example 19 of EP 1 336 683 BI, very preferably anionically stabilized polyurethane-modified and urea-modified silicones having a silicone weight fraction of 70% and an acid number of 30 mg KOH/g. An effect of using polyurethane-modified and/or urea-modified silicones is that the products of the invention combine optimized aging resistance and universal writability with an optimized release behavior.

Further suitable release coatings are crosslinking vinyl acrylic copolymers, preferably self-crosslinking vinyl acrylic copolymers, or acrylic polymers, preferably free of silicone. Such releases are available as water-based systems with a solid content of lower than 60 % by weight, preferably in a range from 10 to 50 % by weight.

In a preferred embodiment the release coating is a release coating based on silicone or fluorosilicone compounds, crosslinking vinyl acrylic copolymers or acrylic polymers.

In a preferred embodiment the release coating is present with a weight below 10 $g/m^2$, preferably in the range from 1 to 8 $g/m^2$.

If present the release coating, when applied with a weight below 10 $g/m^2$, is a thin coating on the surface of the backing layer. It therefore does not influence the physical properties of the backing layer. No differences were measured regarding elongation at break or tensile strength.

In a preferred embodiment of the invention the adhesive tape has a total thickness in a range from 30 $\mu$m to 100 $\mu$m, preferably from 35 $\mu$m to 90 $\mu$m, more preferably 40 $\mu$m to 75 $\mu$m.

In a preferred embodiment the tensile strength of the adhesive tape in ambient conditions is in the range of 15 to 180 N/cm in MD according to ISO 1924, preferably in the range of 25 to 130 N/cm in MD.

In a preferred embodiment the elongation at break of the adhesive tape in ambient conditions is in the range of 30 to 220 % in MD according to ISO 1924, preferably 30 % to 190 % in MD.

The adhesives tapes of the invention are used preferably in widths of 9 to 50 mm.

The adhesive tapes of the invention are especially suitable as carton sealing tape or green house repair tape, preferably using a water-based polyacrylate as adhesive, and more preferably also a thickness within the preferred ranges like 25 $\mu$m to 80 $\mu$m, preferably between 25 $\mu$m and 80 $\mu$m, preferably in the range from 30 $\mu$m to 50 $\mu$m, more preferably in the range from 35 to 45 $\mu$m, even more preferably 38 to 42 $\mu$m.

The adhesive tapes of the invention are especially suitable on agriculture films. Agriculture films are plastic films used in agriculture for various purposes such as greenhouse covering, mulching, silage protection, and crop protection. These films help to improve crop yield, protect crops from pests and diseases, conserve water, and control soil temperature. They are typically made from polyethylene or other plastic materials and come in different colors, thicknesses, and sizes to suit different agricultural applications. Agriculture films are divided into linear low-density polyethylene, low-density polyethylene, high-density polyethylene, EVA/EBA, polyamide, polypropylene, PVC and others. The most widespread type of film used for agriculture is linear low-density polyethylene. This film has various properties, such as high tensile strength, resistance to cracking and UV rays, a barrier against moisture, and suitable temperature properties.

The invention also refers to an adhesive tape roll comprising the adhesive tape according to invention.

The invention also refers to the use of BOPE as backing layer in a carton sealing tape or in agriculture film or green house repair tape, preferable BOPE as described for the adhesive tape of the invention.

BOPE as material is mor sustainable as it has a lower $CO_2$ footprint than BOPP, PVC or PET. It has a lower density than PVC and has comparable properties to PVC.

BOPE has better properties than BOPP when used for CSTs or in agriculture film or green house repair tapes.

BOPE does not emit toxics as a result of incineration.

Other objects and advantages of the present invention may be ascertained from a reading of the specification and appended claims in conjunction with the drawings therein.

Fig. 1a     Schematic drawing of the adhesive tape;
Fig. 1b     Second schematic drawing of the adhesive tape
Fig. 2     Measurement of tensile strength of different backing layers in MD (machine direction, first column in each measurement) and CD (cross direction, second column in each measurement);
Fig. 3     Results of the ballpen test.

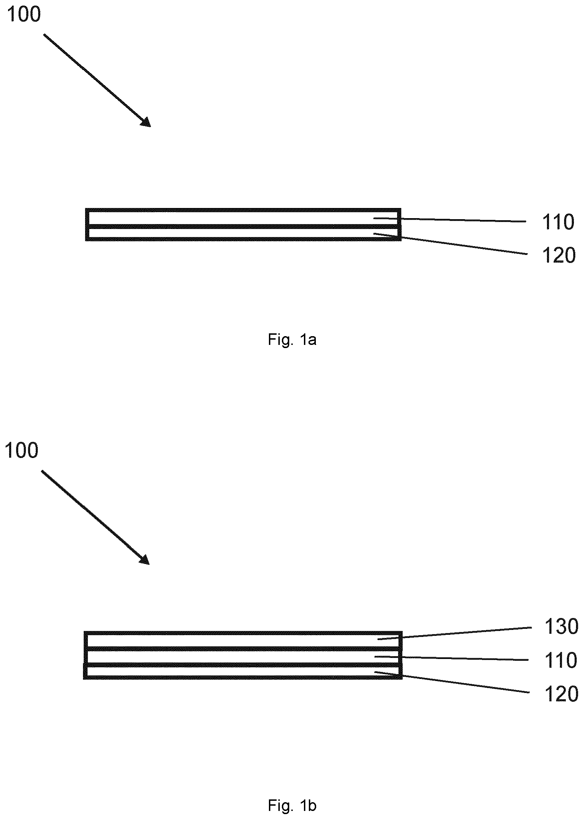

Figure 1a shows a schematic drawing of a preferred embodiment of the invention. The adhesive tape 100 comprises a backing layer 110 comprising a BOPE. On one side of the BOPE an adhesive 120 is applied. In Fig. 1b an alternative adhesive tape 100 is shown. On the other side of the backing layer 110 a release coating 130 is additionally applied.

Examples

An adhesive tape was prepared by applying an adhesive composition based on water-based acrylic adhesive to one side of BOPE. On the other side of the BOPE no release coating is present. The adhesive composition is applied using meyer bar coating.

Table 1 shows results for two different tapes. Examples 1-6 show the results for a 25 µm BOPE backing layer and Example 7 a 40 µm BOPE backing layer.

The results are similar or better as for tapes using usual PE like LDPE as backing material, even with a thickness for 120 µm and natural rubber.

Tear resistance

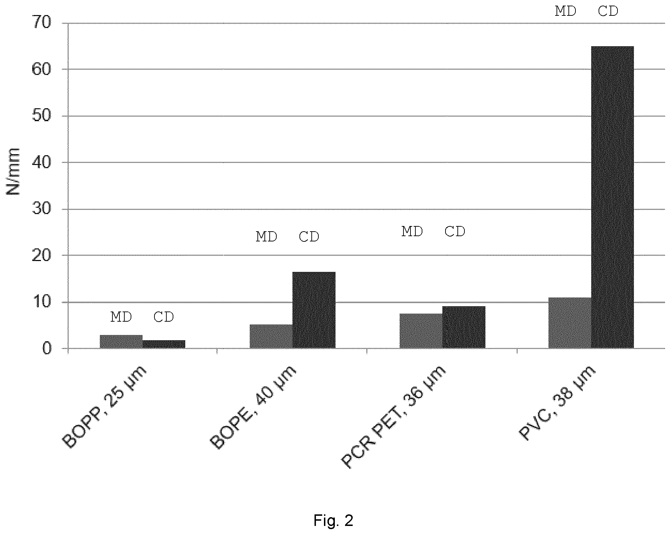

Figure 2 compares the tensile strength in MD (first column) and CD (second column). Tear resistance in CD is very important for CST. BOPE is better than BOPP (biaxially oriented PP) or PCR PET (recycled PET) of similar thickness.

Ball pen test

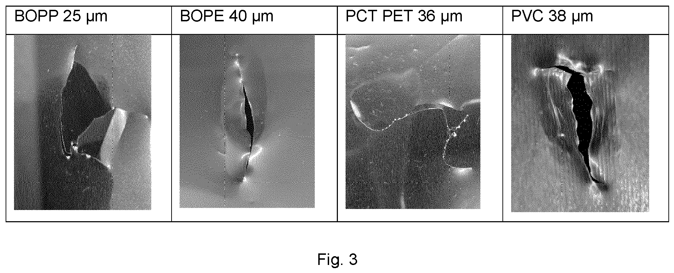

In this test the adhesive tape is penetrated using a ball pen. The pen is pushed through the adhesive tape until the case of the pen is within the hole. The hole is circular and has an approx. size of around 5 mm. The crack propagation is examined. The results are shown in figure 3. A tape with 40 µm BOPE showed a similar crack propagation like a tape with 38 µm PVC. The crack propagation was better than 25 µm BOPP or 36 µm PCR PET (recycled PET).

Box drop test

In this test the dynamic stress during shipping and transport is simulated. A standard carton box is packed with a specific weight and sealed using the carton sealing tape using a semiautomatic case sealer. The box is sealed on the bottom side and the top side using the CST with 70 mm overlap on both sides. The box is then dropped from a specific height. The box is dropped onto an inclined plane. The box is six times with each times a different side of the box to the bottom to the bottom. After each drop the status of the tape is evaluated (torn on the edge or torn at the box flaps).

A box with a weight of 30 kg and sealed with BOPE CST with 40 µm was dropped from 67 cm height six time in triplicate. The tape was not damaged.

The results were better or similar when compared to adhesive tapes using PVC or PCR PET tapes.

Table 1

| Properties | Units | 1 | 2 | 3 | 4 | 5 | 6 | 7 (40 µm) |
|---|---|---|---|---|---|---|---|---|
| Coating weight | g/m$^2$ | 19,1 | 18,0 | 19,0 | 19,0 | 18,7 | 18,3 | 18,4 |
| Total thickness | µm | 44,0 | 44,0 | 44,0 | 45,0 | 44,0 | 43,0 | 51,4 |
| Adhesion to steel (180°) | N/cm | 2,01 | 2,08 | 2,31 | 2,34 | 1,97 | 1,99 | 2,54 |
| Adhesion to backside | N/cm | 1,41 | 1,29 | 2,39 | 2,39 | 1,43 | 2,44 | 2,39 |
| Unwinding force, 0,3 m/min | N/cm | 0,91 | 1,09 | 3,02 | 3,21 | 0,93 | 3,28 | 2,9 |
| Unwinding force, 30 m/min | N/cm | 0,8 | 0,8 | 3,0 | 3,1 | 0,7 | 3,1 | 2,99 |
| Tensile strength MD | N/cm | 29,8 | 32,0 | 31,1 | 29,6 | 30,5 | 29,7 | 46,0 |
| Elongation at break | % | 152,1 | 160,6 | 169,9 | 163,3 | 149,2 | 148,9 | 185,0 |

**Claims**

1. Adhesive tape comprising a backing layer and an adhesive layer comprising a pressure-sensitive adhesive composition on at least one side of the backing layer, **characterized in that** the backing layer comprises biaxial oriented poly-ethylene (BOPE) and has a thickness of from 10 µm and 80 µm.

2. Adhesive tape according to claim 1, **characterized in that** the pressure-sensitive adhesive composition is solvent-based, water-based or hotmelt system adhesive.

3. Adhesive tape according to any of the claims 1 or 2, **characterized in that** the pressure-sensitive adhesive composition is based on water-based acrylic adhesives.

4. Adhesive tape according to any of the claims 1 to 3, **characterized in that** the backing layer has a thickness between 25 $\mu$m and 80 $\mu$m.

5. Adhesive tape according to any of the claims 1 to 3, **characterized in that** the thickness of the backing layer is below 20 $\mu$m.

6. Adhesive tape according to claim 1, **characterized in that** the adhesive tape comprises no release coating on the backing layer opposite to the adhesive composition.

7. Adhesive tape according to any of the claims 1 to 6, **characterized in that** the adhesive composition is present with a weight in the range from 5 g/m$^2$ to 30 g/m$^2$.

8. Adhesive tape roll comprising the adhesive tape according to any one of the claims 1 to 7.

9. Use of biaxial oriented polyethylene (BOPE) as backing layer according to any of the claims 1 to 8 in a carton sealing tape or on agriculture film or green house repair tape.

100

110

120

Fig. 1a

100

130

110

120

Fig. 1b

Fig. 2

| BOPP 25 µm | BOPE 40 µm | PCT PET 36 µm | PVC 38 µm |
|---|---|---|---|
| | | | |

Fig. 3

Europäisches
Patentamt

European
Patent Office

Office européen
des brevets

## PARTIAL EUROPEAN SEARCH REPORT

under Rule 62a and/or 63 of the European Patent Convention.
This report shall be considered, for the purposes of
subsequent proceedings, as the European search report

**Application Number**

EP 24 16 8996

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/110498 A1 (TESA SE [DE]) 13 June 2019 (2019-06-13) * abstract * * page 3, line 25 - line 30 * * page 4, line 1 - line 15 * * page 5, line 22 - page 6, line 25 * * page 8, line 27 - line 29 * * page 11, line 6 - line 17; claims 1,2,4,7,8 * | 1-5,7,8 | INV. C09J7/24 |
| X | US 2023/241871 A1 (WANG GANG [CN] ET AL) 3 August 2023 (2023-08-03) * abstract * * paragraphs [0002], [0003], [0010], [0019], [0020], [0031], [0036], [0067], [0087]; claims 1,3,5-7,12 * | 1,2,4-8 | |
| X | US 2006/234047 A1 (WENNINGER DIETER [DE] ET AL) 19 October 2006 (2006-10-19) * abstract * * paragraphs [0027], [0028], [0029], [0046] - paragraphs [0059], [0142]; claims 13,14 * | 1,2,4, 6-9 | |

TECHNICAL FIELDS
SEARCHED      (IPC)

C09J

## INCOMPLETE SEARCH

The Search Division considers that the present application, or one or more of its claims, does/do
not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| Munich | 30 October 2024 | Meier, Stefan |

EPO FORM 1503 03.82 (P04E07)

Europäisches
Patentamt
European
Patent Office
Office européen
des brevets

**INCOMPLETE SEARCH**
**SHEET C**

**Application Number**

EP 24 16 8996

Claim(s) completely searchable:
     -

Claim(s) searched incompletely:
    1-9

Reason for the limitation of the search:

The reasons for which the application was not fully searchable are
outlined in the annexed opinion

## ANNEX TO THE EUROPEAN SEARCH REPORT
## ON EUROPEAN PATENT APPLICATION NO.

EP 24 16 8996

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2024

| Patent document cited in search report | Publication date | Patent family member(s) | Publication date |
|---|---|---|---|
| WO 2019110498 A1 | 13-06-2019 | CN 111433304 A | 17-07-2020 |
| | | DE 102017221759 B3 | 15-11-2018 |
| | | EP 3720919 A1 | 14-10-2020 |
| | | WO 2019110498 A1 | 13-06-2019 |
| US 2023241871 A1 | 03-08-2023 | AR 123359 A1 | 23-11-2022 |
| | | BR 112023003430 A2 | 21-03-2023 |
| | | CN 115916534 A | 04-04-2023 |
| | | EP 4204231 A1 | 05-07-2023 |
| | | JP 2023546643 A | 07-11-2023 |
| | | TW 202208183 A | 01-03-2022 |
| | | US 2023241871 A1 | 03-08-2023 |
| | | WO 2022041053 A1 | 03-03-2022 |
| US 2006234047 A1 | 19-10-2006 | DE 19939076 A1 | 22-02-2001 |
| | | EP 1078966 A1 | 28-02-2001 |
| | | ES 2230009 T3 | 01-05-2005 |
| | | JP 2001055547 A | 27-02-2001 |
| | | US 2006234047 A1 | 19-10-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150284599 A1
- US 4675582 A
- US 5072493 A
- DE 4313008
- DE 2845541 A
- EP 1336683 A

**Non-patent literature cited in the description**

- **T.G. FOX**. *Bull. Am. Phys. Soc.*, 1956, vol. 1, 123